# EUROPÄISCHE PATENTSCHRIFT

(11) **EP 2 395 255 B1**
(45) Veröffentlichungstag und Bekanntmachung des Hinweises auf die Patenterteilung: **20.08.2014**
(21) Anmeldenummer: 11164789.7
(22) Anmeldetag: 04.05.2011
(51) Int. Cl.: F16D 13/75

(54) **Lösbare axiale Fixierung zweier Bauteile**
Releasable axial fixing of two components
Fixation axiale amovible de deux composants

(30) Priorität: 09.06.2010 DE 102010029863
(43) Veröffentlichungstag der Anmeldung: 14.12.2011
(73) Patentinhaber: ZF Friedrichshafen AG, 88038 Friedrichshafen (DE)
(72) Erfinder: Birk, Reinhard, 88142 Wasserburg (DE)

(56) Entgegenhaltungen:
- DE-A1-102008 009 362
- GB-A- 2 393 774
- US-A- 3 750 489
- US-A- 5 458 430

## Beschreibung

Die Erfindung bezieht sich auf eine Einrichtung zur lösbaren axialen Fixierung zweier mittels einer Mitnahmeverzahnung mit einseitiger Anlage miteinander verbundener Bauteile, insbesondere zur lösbaren axialen Fixierung eines Kupplungskörpers einer Synchronisiereinrichtung an einem Losrad gemäß dem Oberbegriff des Patentanspruchs 1.

Aus dem Stand der Technik ist bekannt, zur Vereinfachung von Getriebeschaltungen in Handschaltgetrieben Synchronisiereinrichtungen einzusetzen, wodurch die Drehzahlanpassung der miteinander zu verbindenden unterschiedlich schnell rotierenden Getriebeelemente, in der Regel eines auf einer Welle angeordneten Losrades und der Welle, auf der das Losrad angeordnet ist, selbsttätig oder gesteuert durchgeführt werden kann.

In der Regel sind die Synchronisiereinrichtungen als Einfachkonus-Synchronisiereinrichtungen ausgeführt, durch die wahlweise zwei Losräder mit einer Welle drehfest verbindbar sind; derartige Synchronisiereinrichtungen weisen für jedes mit der Welle zu verbindende Losrad einen einen Reibkonus aufweisenden Kupplungskörper auf, der beispielsweise durch eine Verzahnung mit dem jeweiligen Losrad verbunden sein kann, wie im Rahmen der DE 199 29 941 A1 der Anmelderin beschrieben, wobei auf jedem Kupplungskörper ein Synchronring mit einer Außenverzahnung vorgesehen ist und wobei zwischen den beiden Synchronringen eine Schiebemuffe angeordnet ist, welche von einem Druckstück auf einer Feder in einem Synchronkörper auf der Welle gehalten ist.

Zum Verbinden eines der Losräder mit der Welle wird der entsprechende Synchronring an den Reibkonus eines Kupplungskörpers angepresst und führt eine durch Anschläge am Synchronkörper begrenzte Drehbewegung aus, die zur Folge hat, dass sich die angeschrägten Zahnstirnflächen des Synchronringes gegen die Zahnstirnflächen der Schiebemuffe pressen, wodurch ein Weiterbewegen der Schiebemuffe verhindert wird. Wenn die Kegelreibflächen den Gleichlauf der miteinander zu verbindenden Teile herbeigeführt haben, bewirkt der anhaltende Druck der Schiebemuffe ein Zurückdrehen des Synchronringes, wodurch die Schiebemuffe in die Verzahnung des Kupplungskörpers eingeschoben wird.

Bei der aus der DE 199 29 941 A1 der Anmelderin bekannten Synchronisiereinrichtung ist vorgesehen, dass in den Losrädern und in den Kupplungskörpern je ein Einstich vorgesehen ist, wobei in den Einstichen je eine Ringfeder angeordnet ist, welche die Kupplungskörper in den Verzahnungen axial entlang der Längsachse der Welle fixiert. Zudem kann vorgesehen sein, dass die Ringfedern durch eine Anschrägung an den Kupplungskörpern bei der Montage radial zusammen und in den entsprechenden Einstich gedrückt werden.

Üblicherweise sind die Kupplungskörper mittels einer kurzen Verzahnung an den Losrädern drehfest angeordnet; bei NKW-Getrieben werden die Kupplungskörper in der Regel mittels einer Mitnahmeverzahnung mit Evolventenprofil mit dem Losrad in Drehrichtung formschlüssig verbunden, wobei die Mitnahmeverzahnung eine Spielpassung aufweist, um eine freie axiale Beweglichkeit für den Kupplungskörper zu ermöglichen.

In nachteiliger Weise kann hierbei der Kupplungskörper am Synchronkörper anlaufen, wodurch das Lüftspiel des Synchronrings eingeschränkt wird, was. zu Durchtriebsverlusten im Getriebe führt; ferner bringt die Spielpassung der Mitnahmeverzahnung auch Spiel in Umfangsrichtung zwischen dem Losrad und dem Kupplungskörper mit sich, was zu einer verstärkten Geräuschentwicklung führt.

Alternativ dazu kann das Losrad mit dem Kupplungskörper, beispielweise durch Schweißen oder durch eine verstemmte Mitnahmeverzahnung, fest verbunden sein; derartige Ausführungen sind jedoch einerseits in der Herstellung teurer und resultieren andererseits in dem Nachteil, dass im Reparaturfall, z.B. bei beschädigter Synchronisiereinrichtung das komplette Losrad ausgetauscht werden muss.

Aus der EP 1 375 969 A2 ist ein Verfahren zum Herstellen eines Getriebeelementes mit einem Zahnrad und einem Kupplungskörper bekannt, bei dem das Zahnrad und der Kupplungskörper mittels einer Umfangsverzahnung koaxial und drehfest miteinander verbunden werden, so dass sie an jeweiligen Radialschultern spielfrei aneinander anliegen, wobei das Zahnrad oder der Kupplungskörper in einem den Radialschultern gegenüberliegenden Bereich in oder benachbart zu der Umfangsverzahnung eine Umfangsnut aufweist, in die ein Ringelement aus einem duktilen Material zur Axialsicherung verstemmt wird.

Gemäß der EP 1 375 969 A2 wird das Ringelement zunächst in die Umfangsnut eingebracht, so dass es unverlierbar darin gehalten ist; anschließend wird das Ringelement mittels eines Stemmwerkzeuges gegen das die Umfangsnut nicht aufweisende Bauelement verstemmt. Durch diese Vorgehensweise wird gewährleistet, dass das Ringelement nicht mehr abfallen kann und somit nicht separat gehandhabt werden muss, bevor der eigentliche Verstemmvorgang stattfindet. Das Einbringen des Ringelementes kann mittels einer Spiel- oder einer Preßpassung erfolgen.

In nachteiliger Weise erfordert das aus der EP 1 375 969 A2 bekannte Verfahren das Vorsehen einer zusätzlichen Umfangsnut im Kupplungskörper in einem den Radialschultern gegenüberliegenden Bereich, was die Fertigungskosten erhöht; des weiteren wird das Entfernen des Ringelementes im Reparaturfall mit erhöhtem Aufwand verbunden sein.

Eine weitere gattungsgemäße Einrichtung ist z.B aus der US 3 750 489 A bekannt.

Der vorliegenden Erfindung liegt die Aufgabe zugrunde, eine Einrichtung zur lösbaren axialen Fixierung zweier mittels einer Mitnahmeverzahnung mit einseitiger Anlage miteinander verbundener Bauteile, wobei das erste Bauteil radial betrachtet im wesentlichen auf dem zweiten Bauteil angeordnet ist, insbesondere zur lösbaren axialen Fixierung eines Kupplungskörpers einer Synchronisiereinrichtung an einem Losrad anzugeben, durch die die Relativbewegungen zwischen den beiden Bauteilen stark eingeschränkt bzw. vollständig verhindert werden. Zudem soll die erfindungsgemäß erzielbare axiale Fixierung kostengünstig herstellbar und mit einfachen Mitteln lösbar sein; ferner soll im Reparaturfall lediglich das beschädigte Bauteil ausgetauscht werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Einrichtung zur lösbaren axialen Fixierung zweier mittels einer Mitnahmeverzahnung mit einseitiger Anlage miteinander verbundener Bauteile, wobei das erste Bauteil radial betrachtet im wesentlichen auf dem zweiten Bauteil angeordnet ist, insbesondere zur lösbaren axialen Fixierung eines Kupplungskörpers einer Synchronisiereinrichtung an einem Losrad vorgeschlagen, welche einen Haltering umfasst, der in eine ringförmige Nut an dem dem zweiten Bauteil zugewandten Ende der Mitnahmeverzahnung einlegbar ist und im montierten Zustand das erste Bauteil auf dem zweiten Bauteil hält und es axial an die Anlagefläche am zweiten Bauteil andrückt.

Gemäß der Erfindung wird insbesondere für den Fall einer Synchronisiereinrichtung (der Kupplungskörper entspricht dem ersten Bauteil und das Losrad dem zweiten Bauteil) eine ohnehin vorhandene und als Freigang für das Stoßwerkzeug der Mitnahmeverzahnung benötigte ringförmige Nut am zweiten Bauteil bzw. am Losrad zum Einlegen des Halteringes verwendet.

Gemäß einer ersten Ausführungsform der Erfindung ist der Haltering ein als Blechumformteil ausgebildeter offener Haltering, wobei nach dem Einlegen des Halteringes in die ringförmige Nut das erste Bauteil über die Außenkontur des Halteringes in seine Montagestellung geschoben wird, wodurch der Haltering elastisch vorgespannt wird und das erste Bauteil in Position hält; die Demontage erfolgt durch kräftiges axiales Verschieben entgegen der Montagerichtung. Diese Ausgestaltung weist den zusätzlichen Vorteil auf, dass die Verzahnungsgeometrie des ersten Bauteils lediglich geringfügig modifiziert werden muss und dass der Haltering zerstörungsfrei demontierbar ist.

Im Rahmen einer zweiten Ausführungsform der Erfindung wird vorgeschlagen, den Haltering als aus Draht geformten offenen Haltering auszuführen. Hierbei ist der Draht so geformt, dass dadurch sowohl eine radiale Führung im Nutgrund des zweiten Bauteils als auch eine axiale Führung an der auch als Abstützung während der Montage des ersten Bauteils dienenden Anlageschulter des zweiten Bauteils erzielt wird.

Gemäß einer weiteren Ausgestaltung der Erfindung ist der Haltering ein als Blechumformteil ausgebildeter offener Haltering, der Krallen bzw. Zungen aufweist, durch die das erste Bauteil am zweiten Bauteil axial gehalten wird. Die Krallen bzw. Zungen liegen im montierten Zustand im Zahngrund des zweiten Bauteils und greifen in eine geeignet geformte Kontur an den Zahnköpfen der Mitnahmeverzahnung des ersten Bauteils ein. Ein zusätzlicher Vorteil dieser Ausgestaltung besteht darin, dass eine Feinabstimmung der Montage- und Haltekraft erzielbar ist.

Alternativ zur Ausführung des Halteringes umfassend Krallen bzw. Zungen als offener Haltering kann der Haltering als geschlossener Haltering ausgeführt sein, wobei dessen Außenkontur derart ausgeführt ist, dass sie sich zur Montage gerade über die Zahnköpfe der Mitnahmeverzahnung des zweiten Bauteils schieben lässt, wobei sie sich elastisch verformt und bei Erreichen der Montagestellung in die ringförmige Nut des zweiten Bauteils einschnappt. Erfindungsgemäß sind zur Ermöglichung der erforderlichen elastischen Deformation im Außenbereich des Halteringes axiale Nuten vorgesehen, wobei der Haltering nicht zerstörungsfrei demontierbar ist.

Um eine zerstörungsfreie Demontage eines derart ausgeführten Halteringes zu ermöglichen, wird im Rahmen einer Weiterbildung der Erfindung vorgeschlagen, die Innenkontur des ersten Bauteils derart zu gestalten, dass die Außenkontur des Halteringes durch diese Innenkontur radial hinter die Zähne des zweiten Bauteils gedrückt werden kann; diese Variante weist den Vorteil auf, dass der Haltering zerstörungsfrei demontierbar ist.

Durch die erfindungsgemäße Konzeption wird für den Fall einer Synchronisiereinrichtung das Lüftspiel ständig auf seinem maximalen Wert gehalten, wodurch die Durchtriebsverluste und das freie Verdrehspiel im Getriebe in vorteilhafter Weise minimiert werden. Dies resultiert wiederum in einer verminderten Geräuschentwicklung, wie sie beispielsweise durch Rasseln oder Klappern hervorgerufen wird.

Die Erfindung wird im Folgenden anhand der beigefügten Figuren am Beispiel der axialen Fixierung eines Kupplungskörpers einer Synchronisiereinrichtung an einem Losrad näher erläutert. Es zeigen:
- Fig. 1:: Eine schematische Schnittansicht einer Synchronisierungseinrichtung, bei der der Kupplungskörper am Losrad über eine Mitnahmeverzahnung verbunden ist;
- Fig. 2:: Eine perspektivische Ansicht eines erfindungsgemäß ausgeführten Halteringes zur lösbaren axialen Fixierung zweier mittels einer Mitnahmeverzahnung mit einseitiger Anlage miteinander verbundener Bauteile;
- Fig. 3:: Eine schematische Schnittansicht der axialen Fixierung eines Kupplungskörpers an einem Losrad mittels des Halteringes gemäß Fig. 2;
- Fig. 4:: Eine perspektivische Schnittansicht der axialen Fixierung eines Kupplungskörpers an einem Losrad mittels des Halteringes gemäß Fig. 2;
- Fig. 5:: Eine teilweise perspektivische Schnittansicht der axialen Fixierung eines Kupplungskörpers an einem Losrad mittels eines gemäß einer zweiten Ausführungsform der Erfindung ausgeführten Halteringes und eine perspektivische Ansicht eines Teiles des Halteringes;
- Fig. 6:: Eine perspektivische Ansicht eines gemäß einer dritten Ausführungsform der Erfindung ausgeführten Halteringes zur lösbaren axialen Fixierung zweier mittels einer Mitnahmeverzahnung mit einseitiger Anlage miteinander verbundener Bauteile;
- Fig. 7:: Eine perspektivische Detailansicht des Halteringes gemäß Fig. 6;
- Fig. 8:: Eine schematische Schnittansicht der axialen Fixierung eines Kupplungskörpers an einem Losrad mittels des Halteringes gemäß Fig. 6;
- Fig. 9:: Zwei perspektivische Schnittansichten der axialen Fixierung eines Kupplungskörpers an einem Losrad mittels des Halteringes gemäß Fig. 6;
- Fig. 10:: Eine perspektivische Ansicht eines gemäß einer vierten Ausführungsform der Erfindung ausgeführten Halteringes zur lösbaren axialen Fixierung zweier mittels einer Mitnahmeverzahnung mit einseitiger Anlage miteinander verbundener Bauteile;
- Fig. 11:: Eine perspektivische Detailansicht des Halteringes gemäß Fig. 10;
- Fig. 12:: Eine schematische Schnittansicht der axialen Fixierung eines Kupplungskörpers an einem Losrad mittels des Halteringes gemäß Fig. 10, wobei die Innenkontur des Kupplungskörpers derart gewählt ist, dass der Haltering zerstörungsfrei demontierbar ist; und
- Fig. 13:: Eine perspektivische Schnittansicht der axialen Fixierung eines Kupplungskörpers an einem Losrad mittels des Halteringes gemäß Fig. 10, wobei die Innenkontur des Kupplungskörpers derart gewählt ist, dass der Haltering zerstörungsfrei demontierbar ist.

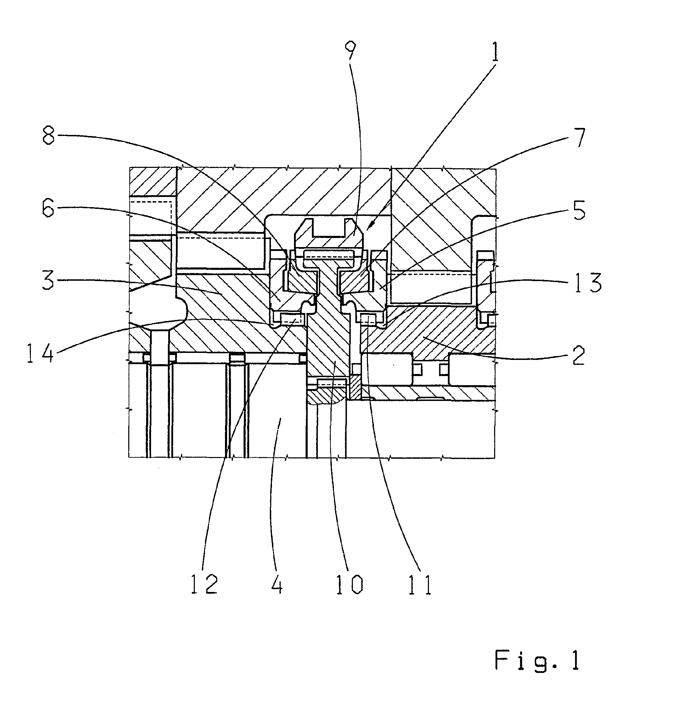

Gegenstand der Fig. 1 ist eine nach dem Stand der Technik ausgeführte Synchronisiereinrichtung 1 zum wahlweise Verbinden eines ersten Losrades 2 und eines zweiten Losrades 3 mit der Welle 4; sie umfasst für jedes mit der Welle 4 zu verbindende Losrad 2, 3 einen Kupplungskörper 5, 6, der durch eine Mitnahmeverzahnung 11, 12 mit dem jeweiligen Losrad verbunden ist. Ferner ist auf jedem Kupplungskörper 5, 6 ein Synchronring 7, 8 mit einer Außenverzahnung vorgesehen; zwischen den beiden Synchronringen 7, 8 ist eine Schiebemuffe 9 angeordnet, welche von einem nicht dargestellten Druckstück auf einer Feder in einem mit der Welle 4 drehfest verbundenen Synchronkörper 10 auf der Welle 4 gehalten ist. In Fig. 1 sind mit dem Bezugszeichen 13 und 14 ringförmige Nuten bezeichnet, die als Freigang für das Stoßwerkzeug der Mitnahmeverzahnung 11 bzw. 12 benötigt werden.

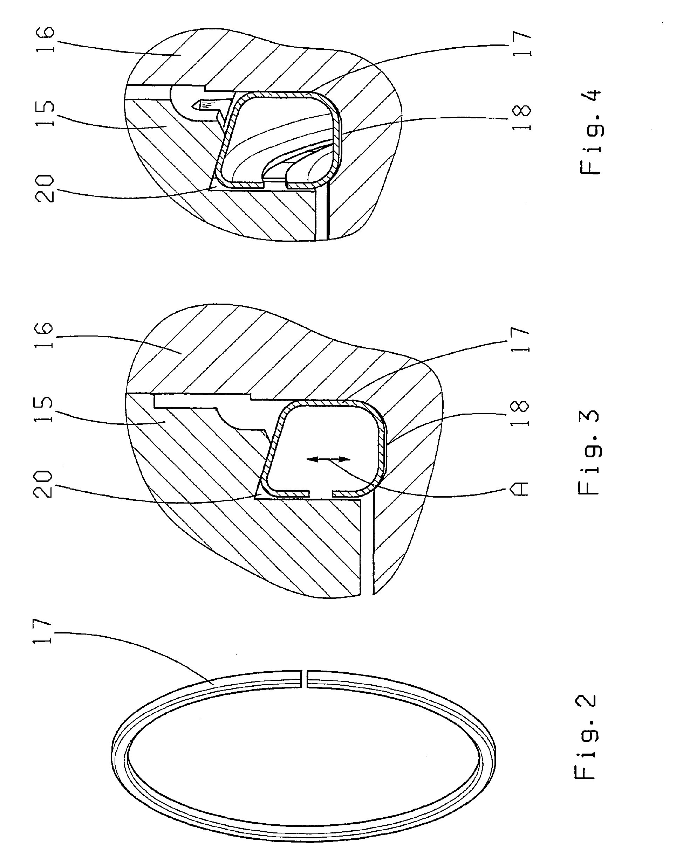

Gemäß der Erfindung und bezugnehmend auf Fig. 2, 3 und 4 wird eine Einrichtung zur lösbaren axialen Fixierung zweier mittels einer Mitnahmeverzahnung mit einseitiger Anlage miteinander verbundener Bauteile, insbesondere zur lösbaren axialen Fixierung eines Kupplungskörpers 15 einer Synchronisiereinrichtung an einem Losrad 16 vorgeschlagen, welche einen Haltering 17 umfasst, der in eine ringförmige Nut 18 an dem dem Losrad 16 zugewandten Ende der Mitnahmeverzahnung einlegbar ist; der Haltering 17 hält im montierten Zustand den Kupplungskörper 15 auf dem Losrad 16 und drückt ihn axial an die Anlagefläche am Losrad 16 an.

Bei dem in Fig. 2 und 3 gezeigten Beispiel wird zum Einlegen des Halteringes als ringförmige Nut 18 die ohnehin vorhandene und als Freigang für das Stoßwerkzeug der Mitnahmeverzahnung benötigte ringförmige Nut verwendet, die in Fig. 1 mit den Bezugszeichen 13 bzw. 14 bezeichnet ist.

Hierbei wird als Haltering 17 vorzugsweise ein als Blechumformteil ausgebildeter offener Haltering verwendet, welcher vom Ringmittelpunkt aus radial betrachtet federnd ausgeführt sein kann, wie durch den Pfeil A in Fig. 3 veranschaulicht; zur Montage wird der Haltering 17 in die ringförmige Nut 18 eingelegt, wobei anschließend der Kupplungskörper 15 über die Außenkontur des Halteringes 17 in seine Montagestellung geschoben wird. Dadurch wird der Haltering 17 elastisch vorgespannt und hält den Kupplungskörper 15, der sich axial in Richtung auf die Synchronisiereinrichtung an der Außenkontur des Halteringes 17 abstützt, in Position; die Zähne der Mitnahmeverzahnung am Kupplungskörper 15 sind entsprechend angepasst. Wie aus Fig. 3 und 4 ersichtlich, weist der Kupplungskörper 15 an seiner der ringförmigen Nut 18 gegenüberliegenden Seite eine ringförmige Nut 20 auf, in der ein Teil des Halteringes 17 im montierten Zustand angeordnet ist.

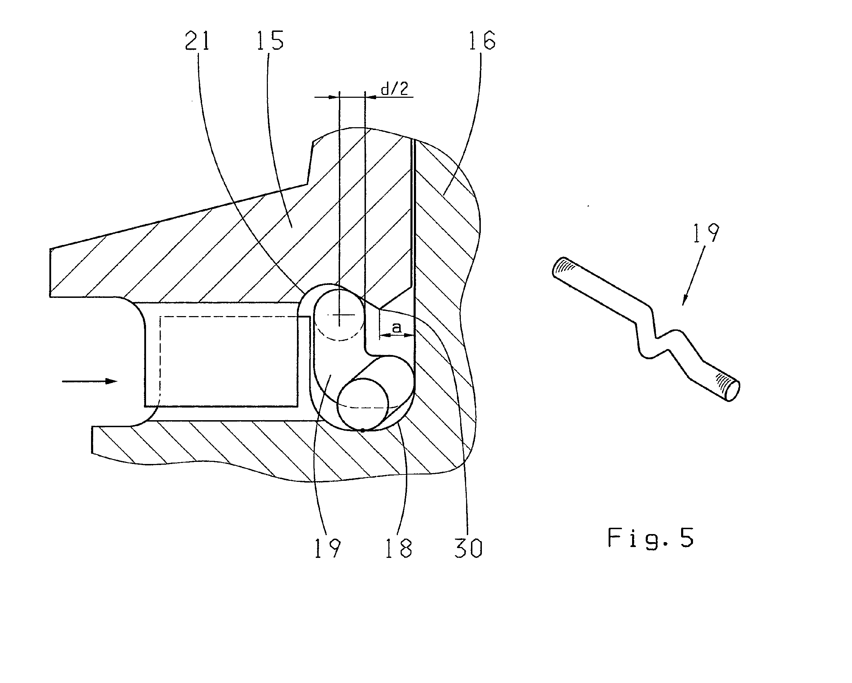

Gegenstand der Fig. 5 ist eine weitere erfindungsgemäße Ausgestaltung eines Halteringes 19. Der Haltering 19 ist als ein aus Draht geformter offener Haltering ausgeführt und derart geformt, dass im montierten Zustand sowohl eine radiale Führung im Nutgrund des Losrades 16 als auch eine axiale Führung an der Anlageschulter des Losrades 16 erzielt wird. Im rechten Teil der Fig. 5 ist die perspektivische Ansicht eines Teiles des Halteringes 19 gezeigt; der Haltering 19 im montierten Zustand ist Gegenstand der teilweise perspektivischen Schnittansicht gemäß dem linken Teil der Fig. 5.

Zur axialen Fixierung des Kupplungskörpers 15 mittels des in die ringförmige Nut 18 einzulegenden Halteringes 19 weist der Kupplungskörper 15 an seiner der ringförmigen Nut 18 gegenüberliegenden Seite eine ringförmige Nut 21 auf, welche im montierten Zustand des Halteringes 19 den Haltering 19 teilweise aufnimmt. Erfindungsgemäß ist vorgesehen, dass der halbe Drahtdurchmesser d/2 des Drahtes des Halteringes 19 größer ist, als der Abstand a zwischen der Anlageschulter des Losrades 16 und der Nutkante 30 der Nut 21, um eine sichere Montage zu gewährleisten.

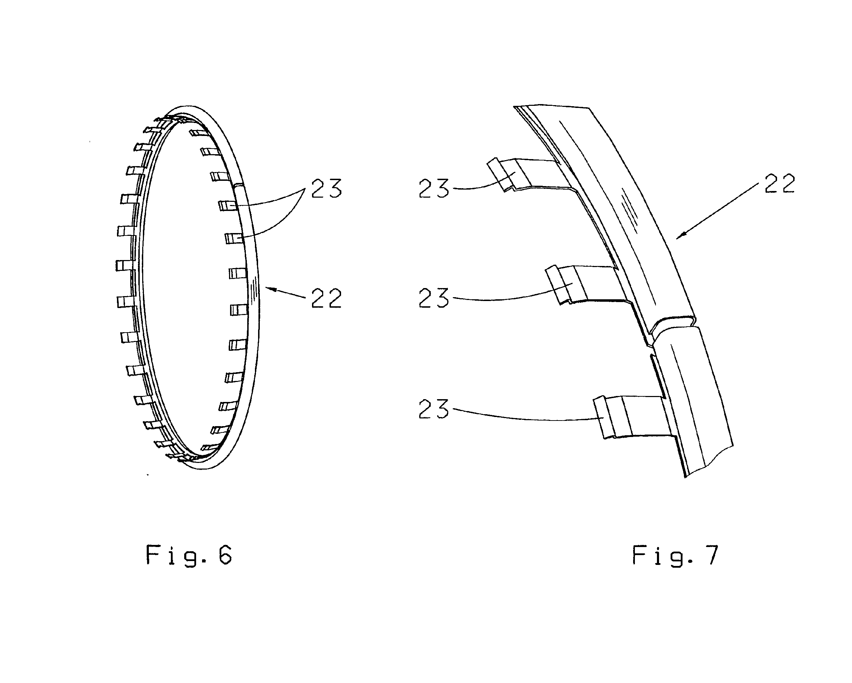

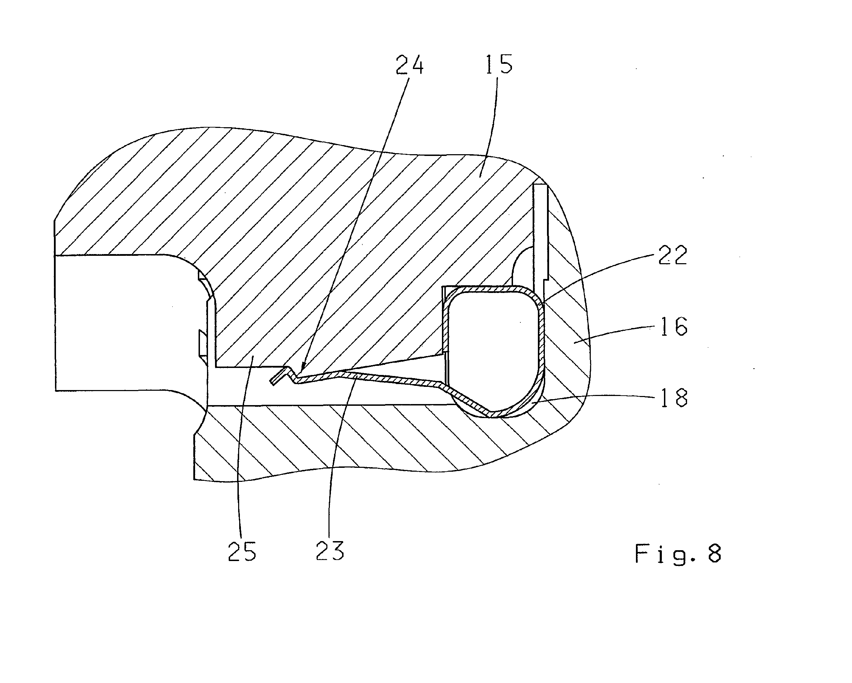

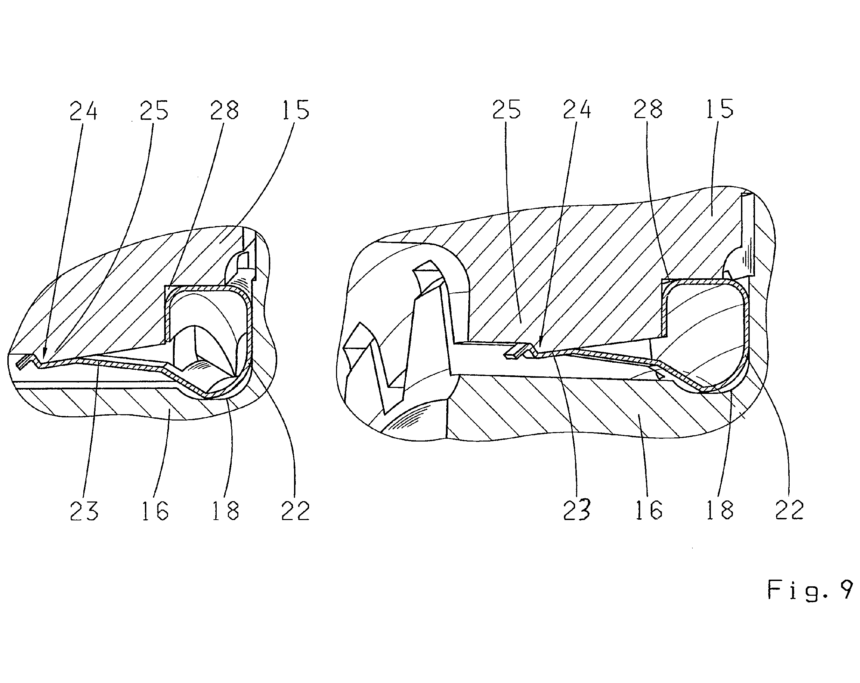

Gemäß einer weiteren Ausführungsform der Erfindung, die Gegenstand der Fig. 6, 7, 8, 9 und 10 ist, ist der Haltering ein als Blechumformteil ausgebildeter offener Haltering 22, der Krallen bzw. Zungen 23 aufweist. Durch die Krallen bzw. Zungen 23 wird der Kupplungskörper 15 am Losrad 16 axial gehalten. Hierbei liegen im montierten Zustand die Krallen bzw. Zungen 23 im Zahngrund des Losrades 15 und greifen in eine geeignet geformte Kontur 24 am Zahnkopf 25 des Kupplungskörpers 15 ein, wie Fig. 8 und 9 zu entnehmen ist. Der Haltering 22 wird in die ringförmige Nut 18 eingelegt.

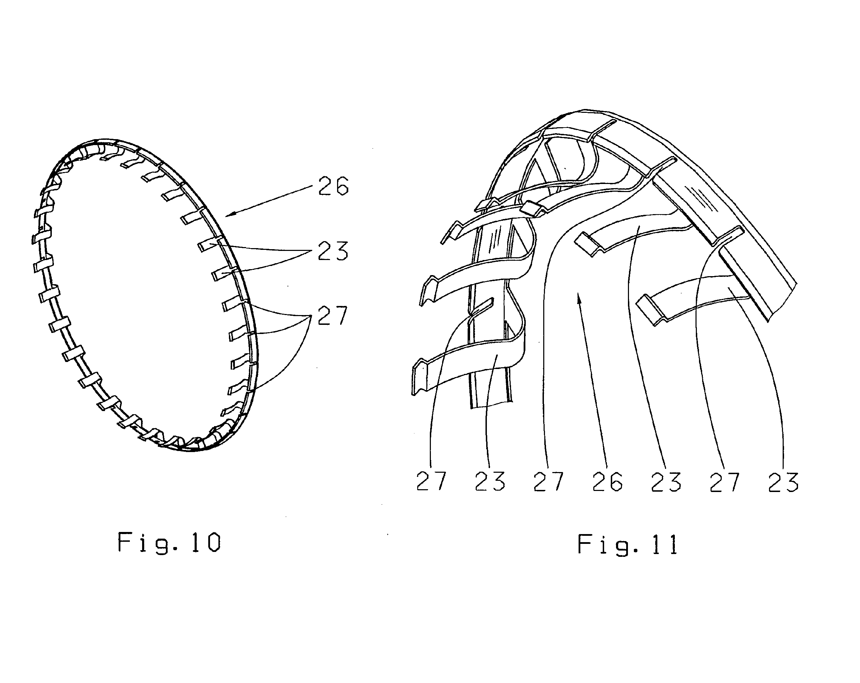

Der Krallen bzw. Zungen 23 aufweisende Haltering 22 kann auch als geschlossener Haltering 26 ausgeführt werden, wie anhand Fig. 10 und 11 veranschaulicht. Hierbei ist die Außenkontur des Halteringes 26 elastisch verformbar ausgeführt und weist zu diesem Zweck über den Umfang verteilte axiale Nuten 27 auf. Zur Montage wird die Außenkontur des Halteringes 26 über die Zahnköpfe der Mitnahmeverzahnung des Losrades geschoben, wobei sie sich elastisch verformt und bei Erreichen der Montagestellung in die ringförmige Nut 18 des Losrades einschnappt; dieser Haltering 26 ist nicht zerstörungsfrei demontierbar. Wie Fig. 8 und 9 zu entnehmen, weist der Kupplungskörper 15 an seiner dem Losrad 16 zugewandten Seite eine der Form des Halteringes 26 entsprechende Kontur 28 auf, an der der Haltering 26 im montierten Zustand anliegt.

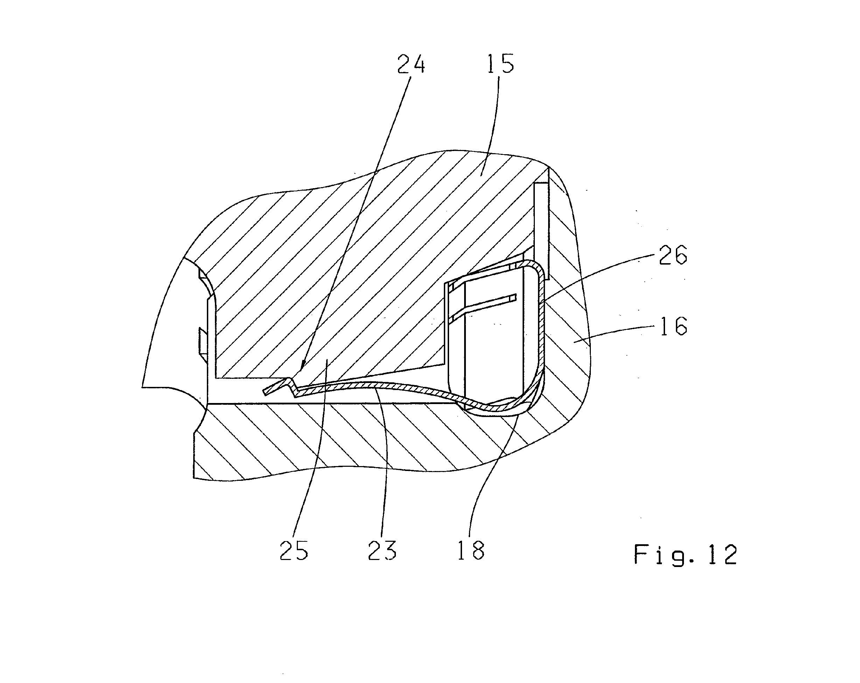

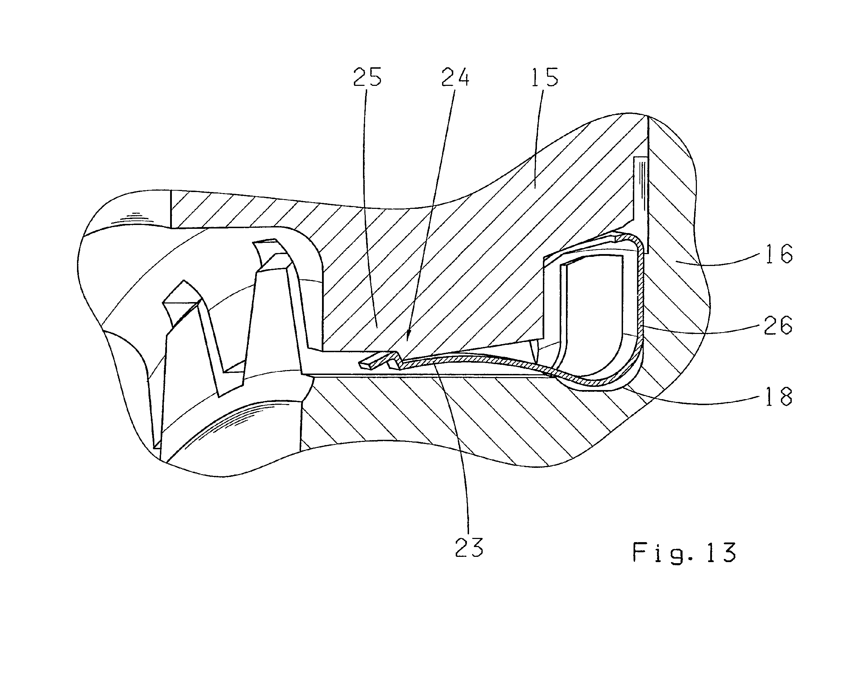

Um eine zerstörungsfreie Demontage des geschlossenen Halteringes 26 zu ermöglichen, wird vorgeschlagen, die Innenkontur des Kupplungskörpers 15 derart zu gestalten bzw. bezugnehmend auf Fig. 12 und 13 mit einer Schräge 29 zu versehen, dass die Außenkontur des Halteringes 26 durch diese Innenkontur radial hinter die Zähne der Mitnahmeverzahnung des Losrades 16 gedrückt werden kann.

### Bezugszeichen

- 1: Synchronisiereinrichtung
- 2: Losrad
- 3: Losrad
- 4: Welle
- 5: Kupplungskörper
- 6: Kupplungskörper
- 7: Synchronring
- 8: Synchronring
- 9: Schiebemuffe
- 10: Synchronkörper
- 11: Mitnahmeverzahnung
- 12: Mitnahmeverzahnung
- 13: ringförmige Nut
- 14: ringförmige Nut
- 15: Kupplungskörper
- 16: Losrad
- 17: Haltering
- 18: ringförmige Nut
- 19: Haltering
- 20: ringförmige Nut
- 21: ringförmige Nut
- 22: Haltering
- 23: Kralle
- 24: Kontur am Zahnkopf 25
- 25: Zahnkopf
- 26: Haltering
- 27: axiale Nut
- 28: Kontur des Kupplungskörpers 15
- 29: Schräge
- 30: Nutkante der Nut 21
- d/2: halber Durchmesser des Drahtes des Halteringes 19
- a: Abstand zwischen der Anlageschulter des zweiten Losrades (16) und der Nutkante (30)

## Patentansprüche

1. Einrichtung zur lösbaren axialen Fixierung zweier mittels einer Mitnahmeverzahnung mit einseitiger Anlage miteinander verbundener Bauteile (15, 16), wobei das erste Bauteil (15) radial betrachtet im wesentlichen auf dem zweiten Bauteil (16) angeordnet ist, insbesondere zur lösbaren axialen Fixierung eines Kupplungskörpers (15) einer Synchronisiereinrichtung (1) an einem Losrad (16), wobei der Kupplungskörper (15) dem ersten Bauteil und das Losrad (16) dem zweiten Bauteil entspricht, wobei sie einen Haltering (17, 19, 22, 26) umfasst, der in eine ringförmige Nut (18) einlegbar ist und im montierten Zustand das erste Bauteil (15) auf dem zweiten Bauteil (16) hält und es axial an eine Anlagefläche am zweiten Bauteil (16) andrückt, **dadurch gekennzeichnet, dass die ringförmige Nut an dem dieser Anlagefläche zugewandten Ende der Mitnahmeverzahnung liegt.**

2. Einrichtung zur lösbaren axialen Fixierung zweier mittels einer Mitnahmeverzahnung mit einseitiger Anlage miteinander verbundener Bauteile (15, 16), nach Anspruch 1, **dadurch gekennzeichnet, dass** als Haltering ein als Blechumformteil ausgebildeter offener Haltering (17) vorgesehen ist, der zur Montage in die ringförmige Nut (18) eingelegt wird, wobei anschließend das erste Bauteil (15) über die Außenkontur des Halteringes (17) in seine Montagestellung geschoben wird.

3. Einrichtung zur lösbaren axialen Fixierung zweier mittels einer Mitnahmeverzahnung mit einseitiger Anlage miteinander verbundener Bauteile (15, 16), nach Anspruch 1, **dadurch gekennzeichnet, dass** der Haltering ein aus Draht geformter offener Haltering (19) ist, der derart geformt ist, dass im montierten Zustand sowohl eine radiale Führung im Nutgrund des zweiten Bauteils (16) als auch eine axiale Führung an der Anlageschulter des zweiten Bauteils (16) erzielt wird, wobei zur axialen Fixierung des ersten Bauteils (15) mittels des in die ringförmige Nut (18) einzulegenden Halteringes (19) das erste Bauteil (15) an seiner der ringförmigen Nut (18) gegenüberliegenden Seite eine ringförmige Nut (21) aufweist, welche im montierten Zustand des Halteringes (19) den Haltering (19) teilweise aufnimmt.

4. Einrichtung zur lösbaren axialen Fixierung zweier mittels einer Mitnahmeverzahnung mit einseitiger Anlage miteinander verbundener Bauteile (15, 16), nach Anspruch 3, **dadurch gekennzeichnet, dass** der halbe Drahtdurchmesser (d/2) größer ist, als der Abstand (a) zwischen der Anlageschulter des zweiten Bauteils (16) und der Nutkante (30) der Nut (21).

5. Einrichtung zur lösbaren axialen Fixierung zweier mittels einer Mitnahmeverzahnung mit einseitiger Anlage miteinander verbundener Bauteile (15, 16), nach Anspruch 1, **dadurch gekennzeichnet, dass** der Haltering ein als Blechumformteil ausgebildeter offener Haltering (22) ist, der Krallen bzw. Zungen (23) aufweist, durch die das erste Bauteil (15) am zweiten Bauteil (16) axial gehalten wird, wobei im montierten Zustand die Krallen bzw. Zungen (23) im Zahngrund des Losrades (15) liegen und in eine geeignet geformte Kontur (24) an den Zahnköpfen (25) des ersten Bauteils (15) eingreifen.

6. Einrichtung zur lösbaren axialen Fixierung zweier mittels einer Mitnahmeverzahnung mit einseitiger Anlage miteinander verbundener Bauteile (15, 16), nach Anspruch 1, **dadurch gekennzeichnet, dass** der Haltering ein als Blechumformteil ausgebildeter geschlossener Haltering (26) ist, der Krallen bzw. Zungen (23) aufweist, durch die das erste Bauteil (15) am zweiten Bauteil (16) axial gehalten wird, wobei im montierten Zustand die Krallen bzw. Zungen (23) im Zahngrund des zweiten Bauteils (15) liegen und in eine geeignet geformte Kontur (24) an den Zahnköpfen (25) des ersten Bauteils (15) eingreifen, wobei die Außenkontur des Halteringes (26) elastisch verformbar ausgeführt ist und über den Umfang verteilte axiale Nuten (27) aufweist und wobei zur Montage die Außenkontur des Halteringes (26) über die Zahnköpfe der Mitnahmeverzahnung des zweiten Bauteils geschoben wird, wobei sie sich elastisch verformt und bei Erreichen der Montagestellung in die ringförmige Nut (18) des zweiten Bauteils einschnappt.

7. Einrichtung zur lösbaren axialen Fixierung zweier mittels einer Mitnahmeverzahnung mit einseitiger Anlage miteinander verbundener Bauteile (15, 16), nach Anspruch 6, **dadurch gekennzeichnet, dass** die Innenkontur des ersten Bauteils (15) derart gestaltet ist, dass die Außenkontur des Halteringes (26) durch diese Innenkontur radial hinter die Zähne der Mitnahmeverzahnung des zweiten Bauteils (16) gedrückt werden kann, wodurch eine zerstörungsfreie Demontage des Halteringes (26) ermöglicht wird.

8. Einrichtung zur lösbaren axialen Fixierung zweier mittels einer Mitnahmeverzahnung mit einseitiger Anlage miteinander verbundener Bauteile (15, 16), nach einem der vorangehenden Ansprüche, **dadurch gekennzeichnet, dass** für den Fall, dass eine als Freigang für das Stoßwerkzeug der Mitnahmeverzahnung benötigte ringförmige Nut am zweiten Bauteil vorhanden ist, diese Nut als Nut (18) zum Einlegen des Halteringes (17, 19, 22, 26) verwendet wird.

## Claims

1. Device for releasable axial fixing of two components (15, 16) connected to one another, with one-sided bearing contact, by means of a dog toothing, the first component (15) being arranged, as seen radially, essentially on the second component (16), in particular for the releasable axial fixing of a clutch body (15) of a synchronizing unit (1) to a loose wheel (16), the clutch body (15) corresponding to the first component and the loose wheel (16) to the second component, the said device comprising a holding ring (17, 19, 22, 26) which can be introduced into a ring-shaped groove (18) and, in the mounted state, holds the first component (15) on the second component (16) and presses it axially against a bearing surface on the second component (16), **characterized in that** the ring-shaped groove lies at that end of the dog toothing which faces this bearing surface.

2. Device for releasable axial fixing of two components (15, 16) connected to one another, with one-sided bearing contact, by means of a dog toothing, according to Claim 1, **characterized in that** the holding ring provided is an open holding ring (17) which is produced as a sheet metal formed part and which, for mounting, is introduced into the ring-shaped groove (18), the first component (15) subsequently being pushed into its mounting position over the outer contour of the holding ring (17).

3. Device for releasable fixing of two components (15, 16) connected to one another, with one-sided bearing contact, by means of a dog toothing, according to Claim 1, **characterized in that** the holding ring is an open holding ring (19) which is formed from wire and which is shaped in such a way that, in the mounted state, both radial guidance in the groove bottom of the second component (16) and axial guidance at the bearing shoulder of the second component (16) are achieved, and, for the axial fixing of the first component (15) by means of the holding ring (19) to be introduced into the ring-shaped groove (18), the first component (15) having, on its side lying opposite the ring-shaped groove (18), a ring-shaped groove (21) which, in the mounted state of the holding ring (19), partially receives the holding ring (19).

4. Device for releasable axial fixing of two components (15, 16) connected to one another, with one-sided bearing contact, by means of a dog toothing, according to Claim 3, **characterized in that** half the wire parameter (d/2) is larger than the distance (a) between the bearing shoulder of the second component (16) and the groove edge (30) of the groove (21).

5. Device for releasable axial fixing of two components (15, 16) connected to one another, with one-sided bearing contact, by means of a dog toothing, according to Claim 1, **characterized in that** the holding ring is an open holding ring (22) which is produced as a sheet metal formed part and has claws or tongues (23), by which the first component (15) is held axially on the second component (16), in the mounted state the claws or tongues (23) lying in the tooth bottom of the loose wheel (16) and engaging into a suitably shaped contour (24) at the tooth tips (25) of the first component (15).

6. Device for releasable axial fixing of two components (15, 16) connected to one another, with one-sided bearing contact, by means of a dog toothing, according to Claim 1, **characterized in that** the holding ring is a closed holding ring (26) which is produced as a sheet metal formed part and has claws or tongues (23), by which the first component (15) is held axially on the second component (16), in the mounted state the claws or tongues (23) lying in the tooth bottom of the second component (16) and engaging into a suitably shaped contour (24) at the tooth tips (25) of the first component (15), the outer contour of the holding ring (26) being designed to be elastically deformable and having axial grooves (27) distributed over the circumference, and, for mounting, the outer contour of the holding ring (26) being pushed over the tooth tips of the dog toothing of the second component, the said outer contour being deformed elastically and snapping into the ring-shaped groove (18) of the second component when the mounting position is reached.

7. Device for releasable axial fixing of two components (15, 16) connected to one another, with one-sided bearing contact, by means of a dog toothing, according to Claim 6, **characterized in that** the inner contour of the first component (15) is configured in such a way that the outer contour of the holding ring (26) can be pressed via this inner contour radially behind the teeth of the dog toothing of the second component (16), as a result of which non-destructive demounting of the holding ring (26) becomes possible.

8. Device for releasable axial fixing of two components (15, 16) connected to one another, with one-sided bearing contact, by means of a dog toothing, according to one of the preceding claims, **characterized in that**, in the event that a ring-shaped grove required as clearance for the butting tool of the dog toothing is present on the second component, this groove is used as a groove (18) for introducing the holding ring (17, 19, 22, 26).

## Revendications

1. Dispositif pour la fixation axiale amovible de deux composants (15, 16) connectés l'un à l'autre au moyen d'une denture d'entraînement avec appui unilatéral, le premier composant (15), considéré radialement, étant disposé essentiellement sur le deuxième composant (16), en particulier pour la fixation axiale amovible d'un corps d'accouplement (15) d'un dispositif de synchronisation (1) sur un pignon fou (16), le corps d'accouplement (15) correspondant au premier composant et le pignon fou (16) correspondant au deuxième composant, le dispositif comprenant une bague de retenue (17, 19, 22, 26) qui peut être insérée dans une rainure annulaire (18) et qui retient, dans l'état monté, le premier composant (15) sur le deuxième composant (16) et qui le presse axialement au niveau d'une surface d'appui contre le deuxième composant (16), **caractérisé en ce que** la rainure annulaire est située au niveau de l'extrémité de la denture d'entraînement tournée vers cette surface d'appui.

2. Dispositif pour la fixation axiale amovible de deux composants (15, 16) connectés l'un à l'autre au moyen d'une denture d'entraînement avec appui unilatéral selon la revendication 1, **caractérisé en ce que** l'on prévoit en tant que bague de retenue une bague de retenue ouverte (17) réalisée sous forme de pièce formée en tôle qui, pour le montage, est introduite dans la rainure annulaire (18), le premier composant (15) étant ensuite poussé par-dessus le contour extérieur de la bague de retenue (17) dans sa position de montage.

3. Dispositif pour la fixation axiale amovible de deux composants (15, 16) connectés l'un à l'autre au moyen d'une denture d'entraînement avec appui unilatéral selon la revendication 1, **caractérisé en ce que** la bague de retenue est une bague de retenue ouverte (19) formée en fil métallique, laquelle est formée de telle sorte que, dans l'état monté, on obtienne à la fois un guidage radial dans la base de rainure du deuxième composant (16) et un guidage axial au niveau de l'épaulement d'appui du deuxième composant (16), le premier composant (15), pour la fixation axiale du premier composant (15) au moyen de la bague de retenue (19), devant être insérée dans la rainure annulaire (18), présentant, au niveau de son côté opposé à la rainure annulaire (18), une rainure annulaire (21) qui reçoit partiellement la bague de retenue (19) dans l'état monté de la bague de retenue (19).

4. Dispositif pour la fixation axiale amovible de deux composants (15, 16) connectés l'un à l'autre au moyen d'une denture d'entraînement avec appui unilatéral selon la revendication 3, **caractérisé en ce que** le demi-diamètre du fil métallique (d/2) est supérieur à la distance (a) entre l'épaulement d'appui du deuxième composant (16) et l'arête de rainure (30) de la rainure (21).

5. Dispositif pour la fixation axiale amovible de deux composants (15, 16) connectés l'un à l'autre au moyen d'une denture d'entraînement avec appui unilatéral selon la revendication 1, **caractérisé en ce que** la bague de retenue est une bague de retenue ouverte (22) réalisée sous forme de pièce formée en tôle, qui présente des griffes ou des langues (23) par lesquelles le premier composant (15) est retenu axialement sur le deuxième composant (16), les griffes ou les langues (23), dans l'état monté, étant situées dans la base des dents du pignon fou (16) et venant en prise dans un contour de forme appropriée (24) au niveau des têtes de dents (25) du premier composant (15).

6. Dispositif pour la fixation axiale amovible de deux composants (15, 16) connectés l'un à l'autre au moyen d'une denture d'entraînement avec appui unilatéral selon la revendication 1, **caractérisé en ce que** la bague de retenue est une bague de retenue fermée (26) réalisée sous forme de pièce formée en tôle, qui présente des griffes ou des langues (23) par lesquelles le premier composant (15) est retenu axialement sur le deuxième composant (16), les griffes ou les langues (23), dans l'état monté, étant situées dans la base des dents du deuxième composant (16) et venant en prise dans un contour de forme appropriée (24) au niveau des têtes de dents (25) du premier composant (15), le contour extérieur de la bague de retenue (26) étant réalisé de manière déformable élastiquement et présentant des rainures axiales (27) réparties sur la périphérie et, pour le montage, le contour extérieur de la bague de retenue (26) étant poussé par-dessus les têtes de dents de la denture d'entraînement du deuxième composant, en se déformant élastiquement et, une fois la position de montage atteinte, en s'encliquetant dans la rainure annulaire (18) du deuxième composant.

7. Dispositif pour la fixation axiale amovible de deux composants (15, 16) connectés l'un à l'autre au moyen d'une denture d'entraînement avec appui unilatéral selon la revendication 6, **caractérisé en ce que** le contour intérieur du premier composant (15) est configuré de telle sorte que le contour extérieur de la bague de retenue (26) puisse être pressé par ce contour intérieur radialement derrière les dents de la denture d'entraînement du deuxième composant (16), de sorte qu'un démontage sans destruction de la bague de retenue (26) soit possible.

8. Dispositif pour la fixation axiale amovible de deux composants (15, 16) connectés l'un à l'autre au moyen d'une denture d'entraînement avec appui unilatéral selon l'une quelconque des revendications précédentes, **caractérisé en ce que** dans le cas où une rainure annulaire requise en tant qu'espace libre pour l'outil à impact de la denture d'entraînement est prévue au niveau du deuxième composant, cette rainure est utilisée en tant que rainure (18) pour l'insertion de la bague de retenue (17, 19, 22, 26).
